# EUROPÄISCHE PATENTSCHRIFT

(11) **EP 2 870 379 B1**
(45) Veröffentlichungstag und Bekanntmachung des Hinweises auf die Patenterteilung: **20.06.2018**
(21) Anmeldenummer: 13745790.9
(22) Anmeldetag: 08.07.2013
(51) Int. Cl.: H01F 41/06, F16F 9/32, F16F 9/53

(54) **VERFAHREN ZUR HERSTELLUNG EINER BAUGRUPPE UND BAUGRUPPE**
METHOD FOR PRODUCING A SUBASSEMBLY AND SUBASSEMBLY
PROCÉDÉ DE PRODUCTION D'UN ENSEMBLE, ET ENSEMBLE CORRESPONDANT

(30) Priorität: 09.07.2012 DE 102012013480
(43) Veröffentlichungstag der Anmeldung: 13.05.2015
(73) Patentinhaber: Inventus Engineering GmbH, 6771 St. Anton i. M. (AT)
(72) Erfinder: BATTLOGG, Stefan, A-6771 St. Anton im Montafon (AT); KIEBER, Michael, A-6780 Schruns (AT)
(74) Vertreter: BSB Patentanwälte Schütte & Engelen Partnerschaft mbB
(86) Internationale Anmeldenummer: PCT/EP2013/002002
(87) Internationale Veröffentlichungsnummer: WO 2014/009000

(56) Entgegenhaltungen:
- WO-A1-2008/133720
- JP-A- 2007 263 221
- JP-A- 2008 175 247
- JP-A- 2009 133 472
- US-A1- 2002 130 001
- US-A1- 2002 144 870

## Beschreibung

Die vorliegende Erfindung betrifft eine Baugruppe und ein Verfahren zum Herstellen einer Baugruppe, wobei die Baugruppe einen Trennkörper mit einem darin verlaufenden Strömungskanal umfasst. Die Strömung eines magnetorheologischen Fluides entlang des Strömungskanals wird durch eine Magnetfelderzeugungseinrichtung beeinflusst, um definierte Bedingungen herzustellen.

Im Stand der Technik sind Baugruppen bekannt geworden, bei denen der Durchfluss eines magnetorheologischen Fluides durch Einstellung eines entsprechenden Magnetfeldes an dem Strömungskanal gezielt gedämpft oder sogar unterbunden wird.

Beispielsweise sind Dämpfer bekannt geworden, die einen Dämpferkolben mit einem magnetorheologischen Ventil umfassen, wobei die Stärke der Dämpfung von dem angelegten Magnetfeld abhängt. Ein solcher Dämpferkolben mit einem magnetorheologischen Ventil umfasst eine Vielzahl von Teilen, die sorgfältig hergestellt werden müssen, um eine reproduzierbare Montage und somit Dämpfer ohne zu große Serienstreuungen und damit Performanceunterschiede zur Verfügung stellen zu können.

Ein elektrisch betriebenes magnetorheologisches Dämpfungsventil umfasst eine auf einen Kern gewickelte elektrische Spule, einen Dämpfungsspalt, durch den das magnetorheologische Fluid durchtritt und einen magnetischen Leiter, der das Magnetfeld schließt. Die einzelnen Komponenten müssen sorgfältig montiert und gegeneinander abgedichtet werden, um die gewünschte Funktion sicherzustellen, dies mitunter bei Drücken bis 600 bar. Das erfordert einen erheblichen Aufwand, sodass die Fertigung solcher Baugruppen aufwendig und somit relativ teuer ist.

Aus der US 2002/0130001 A1 ist ein magnetorheologischer Fluiddämpfer bekannt geworden, bei dem ein Kolben über seinen Umfang einen in vier Kanalsegmente geteilten Ringspalt aufweist. Der Kolben weist einen äußeren Flußring und einen inneren Kolbenkern auf, um dessen Längsachse eine magnetische Spule gewickelt ist. Auf der äußeren Oberfläche des Flußrings sind über dem Umfang verteilt vier kreuzförmige Befestigungsnuten eingebracht, die mit Durchgangslöchern nach innen versehen sind. Zur Verbindung des Flußrings mit dem Kolbenkern wird an den Befestigungsnuten von außen Kunststoff eingespritzt, der durch die Durchgangslöcher durchtritt und den Ringspalt durchtritt und Pylone mit radialen Vorsprüngen bildet, die sich bis zu der magnetischen Spule an dem Kolbenkern erstrecken. Dabei wird die eingespritzte Menge so bemessen, dass ein signifikanter Teil des Ringspaltes für die Strömung des magnetorheologischen Fluids frei bleibt. Ein solcher Fluiddämpfer weist aber den Nachteil auf, dass die radialen Vorsprünge der Pylone bei Belastung sehr hohe Scherkräfte tragen müssen, was zu Haltbarkeitsprobleme führen kann. Außerdem soll zwar über die eingespritzte Kunststoffmenge ein signifikanter Teil des Ringspaltes frei gelassen werden, aber eine konstante und wiederholbare Form des frei bleibenden Ringspaltes kann nicht gewährleistet werden, da der flüssige Kunststoff von Mal zu Mal unterschiedlich in den Ringspalt fließt, sodass bei der Fertigung erhebliche Serienstreuungen zu erwarten sind.

Mit der US 7,849,983 B2 ist ein magnetorheologischer Fluiddämpfer bekannt geworden, der einen Kolben mit Polen an den axialen Enden und einer um die Längsachse des Kolbens gewickelten Spule aufweist. Der Kolben läuft innerhalb eines zylindrischen Gehäuses und trennt eine erste von einer zweiten magnetorheologischen Dämpferkammer. Der Dämpfungsspalt ist radial zwischen der Außenoberfläche des Kolbens und der radial inneren Oberfläche des zylindrischen Gehäuses vorgesehen. Bei der Fertigung wird der Kolben mit den metallischen Polen und der elektrischen Spule in eine Gießform verbracht und es wird unter Druck ein Polymer eingespritzt. Der Kolben stellt mit dem Polymer auf der Außenoberfläche somit eine definierte Außenoberfläche zur Verfügung. Nachteilig daran ist aber, dass der Kolben über eine Lageranordnung extrem genau in dem zylindrischen Gehäuse geführt werden muss, um einen ungleichmäßigen Spalt über dem Umfang und einen Kontakt des Kolbens mit der Innenoberfläche des zylindrischen Gehäuses zu vermeiden. Außerdem muss das zylindrische Gehäuse aus einem magnetisch leitenden Material ausgebildet sein, um das Magnetfeld schließen zu können.

Es ist deshalb die Aufgabe der vorliegenden Erfindung, eine ein Verfahren zur Herstellung einer Baugruppe und eine solche Baugruppe und zur Verfügung zu stellen, womit eine reproduzierbare Herstellung solcher Baugruppen kostengünstig möglich ist.

Diese Aufgabe wird gelöst durch ein Verfahren mit den Merkmalen des Anspruchs 1. Die erfindungsgemäße Baugruppe ist Gegenstand des Anspruchs 8. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Verfahren dient zur Herstellung einer Baugruppe mit einem Trennkörper und wenigstens einen daran angeordneten oder darin vorgesehenen und sich entlang des oder im Trennkörpers erstreckenden Strömungskanal mit wenigstens einer Strömungsbahn auf, um eine Strömung eines magnetorheologischen Fluids entlang des Strömungskanals oder einem Teilbereich des Strömungskanals des Trennkörpers zu beeinflussen. Dabei weist der Trennkörper weiterhin mehrere Komponenten und darunter wenigstens eine Magnetfelderzeugungseinrichtung zur Erzeugung eines Magnetfeldes und wenigstens eine Feldschließeinrichtung auf. Die Magnetfelderzeugungseinrichtung und die Feldschließeinrichtung werden unter Verwendung wenigstens eines Platzhalters zur Ausbildung des oder zumindest eines Teiles des Strömungskanals mit wenigstens einem sich verfestigenden Medium verfüllt, um an dem Trennkörper wenigstens einen dreidimensional vordefinierten Strömungskanal auszubilden, der nach der Entfernung des Platzhalters zur Verfügung steht.

Der beim Verfüllen durch den Platzhalter reservierte Raum wird steht nach dem Entfernen des Platzhalters als dreidimensional vordefinierter Strömungskanal zur Verfügung.

Insbesondere zur hydraulisch dichten Verbindung der Komponenten des Trennkörpers wird wenigstens die Magnetfelderzeugungseinrichtung mit der Feldschließeinrichtung des Trennkörpers mit einem sich verfestigenden Medium in Form von z. B. einer Vergussmasse vergossen oder mit wenigstens einem Kunststoff umspritzt. Das erfindungsgemäße Verfahren hat viele Vorteile, da es eine einfache Herstellung einer erfindungsgemäßen Baugruppe ermöglicht. Eine mit einem erfindungsgemäßen Verfahren hergestellte Baugruppe weist eine hohe Reproduzierbarkeit auf und ist hoch belastbar. Das Verfahren ist bei der erreichten Qualität sehr kostengünstig.

Mit der Formulierung, dass sich ein Strömungskanal "entlang" des Trennkörpers erstreckt, wird im Sinne der vorliegenden Erfindung verstanden, dass sich der Strömungskanal von einem Ende zum anderen Ende erstreckt. Der Strömungskanal kann linear ausgebildet sein, kann aber auch Windungen aufweisen oder sich in Schlangenlinien oder schräg von einem Ende zum anderen Ende erstrecken.

Die Strömung des magnetorheologischen Fluids wird wenigstens über einen Teilbereich des Strömungskanals beeinflusst. Eine Beeinflussung über die gesamte Länge ist nicht erforderlich.

Vorzugsweise wird der Kern von einem Spulenhalter umgeben, der beispielsweise aus Kunststoff besteht. Vorzugsweise wird auf den Spulenhalter eine elektrische Spuleneinrichtung gewickelt.

Vorzugsweise ist die durch das sich verfestigende Medium gebildete Verbindung hydraulisch druckdicht, sodass das magnetorheologische Fluid durch den Strömungskanal strömen muss.

Vorteilhafterweise wird vor dem Verfüllen die Magnetfelderzeugungseinrichtung zunächst auf den Kern oder den Spulenhalter gewickelt. Der Kern kann vor dem Verfüllen in die Magnetfelderzeugungseinrichtung eingebracht werden. Wenigstens ein Platzhalter wird in der Feldschließeinrichtung positioniert. Anschließend wird der Kern mit der Magnetfelderzeugungseinrichtung und der Feldschließeinrichtung verfüllt, sodass nach der späteren Entnahme des Platzhalters oder der Platzhalter der wenigstens eine Strömungskanal zur Verfügung steht, während der Trennkörper an sich hydraulisch dicht ausgebildet ist.

Vorteilhafterweise wird wenigstens eine Trennwand an dem Spulenhalter angeordnet, um den Strömungskanal in zwei oder mehr Strömungsbahnen aufzuteilen.

Zur Herstellung wird ein Einsatz bzw. ein Einsatzteil oder ein Einschubteil gebildet, welches beispielsweise aus einem Stapel aus einer ersten Trennlehre als Platzhalter, wenigstens einer Trennwand und wenigstens einer zweiten Trennlehre als Platzhalter gebildet wird.

Möglich ist es hier auch, dass ein Einsatz aus einem oder mehreren Platzhaltern gebildet wird. Ein einzelner Platzhalter oder einer aus mehreren Teilen zusammengesetzter Platzhalter wird beispielsweise verwendet, wenn ein Strömungskanal nicht in Teilkanäle aufgeteilt wird. Soll hingegen der Strömungskanal in mehrere Strömungsbahnen aufgeteilt werden, so besteht der Einsatz aus einem Stapel unterschiedlicher Bauteile, die aufeinandergestapelt werden.

Bei der Montage wird vorzugsweise der Kern mit dem Spulenhalter und der elektrischen Spuleneinrichtung und wenigstens einem Einsatz in die Feldschließeinrichtung eingeführt. Vorzugsweise wird die Feldschließeinrichtung zuvor oder danach in eine Form eingeführt. Anschließend erfolgt das Vergießen mit dem sich verfestigenden Medium in Form beispielsweise einer Vergussmasse oder es erfolgt das Einspritzen von Kunststoff oder anderen dafür vorteilhaften Materialien. Das Vergießen kann bei normalem Druck erfolgen, kann aber auch unter Einsatz von Unterdruck und/oder Überdruck erfolgen.

In allen Ausgestaltungen wird nach dem Gießvorgang das sich verfestigende Medium vorzugsweise ausgehärtet. Das Aushärten kann durch eine Temperierung unterstützt werden. Möglich ist auch der Einsatz von beispielsweise UV-Strahlung oder sonstiger Strahlung, um den Verfestigungsvorgang zu beschleunigen. Möglich ist auch der Einsatz chemischer Mittel.

Sinngemäß kann anstelle des Vergießens ein anderes geeignetes Verfahren wie beispielsweise der (Kunststoff-) Spritzguss verwendet werden.

Die dargestellten Ausführungsformen zeigen die Anwendung eines erfindungsgemäßen Aufbaus in einem Dämpfer, beispielsweise als Stoßdämpfer in einem Fahrzeug, Fahrrad oder Prothese. Sinngemäß kann der Aufbau ohne bewegbaren Kolben und Kolbenstange als Ventil verwendet werden.

In allen Ausgestaltungen wird nach dem Aushärten wenigstens ein Platzhalter entfernt, um den Strömungskanal und/oder die Strömungsbahnen des Strömungskanals freizugeben.

Eine erfindungsgemäße Baugruppe wird insbesondere nach einem der vorhergehend beschriebenen Verfahren hergestellt. Die erfindungsgemäße Baugruppe weist einen Trennkörper und wenigstens einen daran vorgesehenen und sich durch den Trennkörper oder entlang des Trennkörpers erstreckenden Strömungskanal mit wenigstens einer Strömungsbahn auf, um eine Strömung eines magnetorheologischen Fluids entlang des Strömungskanals - oder in Teilbereichen davon - des Trennkörpers zu beeinflussen. Der Trennkörper umfasst wenigstens eine Magnetfelderzeugungseinrichtung zur Erzeugung eines Magnetfeldes und eine Feldschließeinrichtung. Die Feldschließeinrichtung ist mit der Magnetfelderzeugungseinrichtung unter Verwendung wenigstens eines Platzhalters mit einem sich verfestigenden Medium verfüllt, derart, dass der Trennkörper wenigstens einen dreidimensional vordefinierten Strömungskanal aufweist. Der Strömungskanal steht nach der Entnahme des Platzhalters zur Verfügung.

Die erfindungsgemäße Baugruppe hat viele Vorteile, da sie einfach und reproduzierbar herzustellen ist und einen funktionssicheren Betrieb ermöglicht.

Die erfindungsgemäße Baugruppe stellt vorzugsweise einen hydraulisch dichten Trennkörper zur Verfügung, der insbesondere nur durch den daran angeordneten Strömungskanal oder durch die daran vorgesehenen Strömungsverbindungen durchströmt werden kann.

Dabei hängt die Durchströmbarkeit insbesondere von dem Magnetfeld der Magnetfelderzeugungseinrichtung ab. Ohne Magnetfeld kann ein magnetorheologisches Fluid im Wesentlichen ungehindert durch den Strömungskanal durchtreten. Mit einem starken Magnetfeld kann die Durchströmung eines magnetorheologischen Fluids vorzugsweise auch vollständig unterbunden werden.

Das sich verfestigende Medium kann wenigstens eine Vergussmasse sein oder eine solche umfassen. Das sich verfestigende Medium kann vergossen oder gespritzt werden. Es kann z. B. wenigstens ein Medium eingesetzt werden, welches unter bestimmten Bedingungen flüssig ist oder wird und dann vergossen oder eingespritzt wird und danach aushärtet. Das sich verfestigende Medium kann z. B. ein aushärtendes Medium sein oder wenigstens ein solches umfassen.

Vorzugsweise wird die Magnetfelderzeugungseinrichtung mit der Feldschließeinrichtung des Trennkörpers mit einem sich verfestigenden Medium verfüllt und/oder vergossen und/oder umspritzt.

Dadurch, dass die Komponenten des Trennkörpers insbesondere miteinander vergossen und somit über das sich verfestigende Medium fest miteinander verbunden sind, kann eine dauerhafte Funktion sicher gewährleistet werden. Bei Baugruppen aus dem Stand der Technik muss hingegen in der Regel jede einzelne Komponente mit den anderen Komponenten verbunden und gegenüber den anderen Komponenten aufwendig abgedichtet werden. Eine solche Montage ist aufwendig und zugleich fehlerträchtig. Die erfindungsgemäße Baugruppe stellt hingegen auf einfache Art und Weise eine funktionstüchtige Baugruppe zur Verfügung. Dabei wird durch das sich verfestigende Medium für eine feste und dauerhaft dichte Verbindung der einzelnen Komponenten gesorgt, auch wenn diese Ungenauigkeiten aufgrund von größeren Streuungen der Fertigungstoleranzen oder aber Oberflächenfehler oder Rauheit aufweisen.

Als sich verfestigendes Medium kann z. B. eine Vergussmasse und/oder eine sich verfestigende und insbesondere aushärtende Gussmasse eingesetzt. Möglich ist es beispielsweise, dass ein Zweikomponentenwerkstoff als sich verfestigendes Medium eingesetzt wird, der zunächst flexibel verarbeitbar ist und im Anschluss selbstständig aushärtet. Dabei kann das Aushärten unter definierten Bedingungen wie beispielsweise einer erhöhten Temperatur erfolgen. Es kann aber auch möglich sein, dass das Aushärten ohne besondere Bedingungen beispielsweise bei Raumtemperatur erfolgt.

Insbesondere wird eine hydraulisch dichte Verbindung der Komponenten des Trennkörpers ermöglicht. Insbesondere wird durch das sich verfestigende Medium die Strömung des magnetorheologischen Fluids im Wesentlichen und vorzugsweise praktisch vollständig auf die Strömungskanäle beschränkt. Es kann aber auch wenigstens ein separater Bypasskanal vorgesehen sein.

Durch die Verwendung eines oder doch wenigstens eines Platzhalters wird eine räumlich genau definierte Form des Strömungskanals ermöglicht. Der Platzhalter kann einteilig ausgebildet sein. Der Platzhalter kann auch aus mehreren Einzelteilen bestehen. Nach dem Verfüllen wird der Platzhalter entfernt und ist vorzugsweise wiederverwendbar. Der Platzhalter kann aus einer Trennlehre bestehen oder wenigstens eine solche umfassen. Die Trennlehre kann metallisch sein oder aus einem geeigneten anderen Werkstoff bestehen.

Möglich ist auch die Verwendung eines Platzhalters aus einem Material wie Wachs oder die Verwendung von einem eutektischen Metall. Der Platzhalter kann dann nach dem Verfüllen aus dem Trennkörper ausgewaschen oder aufgeschmolzen werden. Möglich ist auch die Auflösung mit chemischen Mitteln.

Der Platzhalter selbst oder das geschmolzene Material kann wieder verwendet werden.

Vorzugsweise ist wenigstens ein Strömungskanal durch wenigstens eine Trennwand in wenigstens zwei Strömungsbahnen aufgeteilt. Dabei kann eine Strömungsbahn auch als Teilkanal angesehen werden. Vorzugsweise sind die wenigstens zwei Strömungsbahnen über ihrer vollständigen Länge wenigstens teilweise und insbesondere vollständig voneinander getrennt. Durch eine solche Trennwand, die beispielsweise im Wesentlichen als dünnes und vorzugsweise ferromagnetisches Trennblech ausgeführt sein kann, ohne darauf beschränkt zu sein, wird mit einfachen Mitteln der Strömungskanal in zwei Teilkanäle bzw. Strömungsbahnen aufgeteilt. Dadurch wird eine noch effektivere Beeinflussung der Strömung durch den Strömungskanal möglich. In einfachen Fällen wird als Trennwand ein dünnes Trennblech eingesetzt. Vorzugsweise ist die Trennwand dünn gegenüber der Höhe einer Strömungsbahn des Strömungskanals. Dadurch wird der volle Strömungsquerschnitt nur wenig verringert, wodurch eine kleine Baugröße eingehalten werden kann. Die Stirnseiten der Trennwand können dabei strömungstechnisch vorteilhafte Konturen aufweisen.

Besonders bevorzugt ist die Trennwand als separates Trennblech ausgebildet und wird mit dem Trennkörper über das sich verfestigende Medium vergossen. Dadurch werden eine einfache Fertigung und eine haltbare Baugruppe ermöglicht.

Vorzugsweise weist die Trennwand wenigstens eine Rasteinrichtung auf, die mit dem sich verfestigenden Medium und/oder mit weiteren Komponenten des Trennkörpers verrastet, sodass auch bei hohen Drücken eine zuverlässige Funktion gewährleistet werden kann. Insbesondere sind zwei, drei oder mehr Rasteinrichtungen in Form von beispielsweise Rastzähnen, Rasthaken, Rastösen oder Rastriefen oder dergleichen mehr vorgesehen, um eine feste Verbindung zwischen der Trennwand und dem Trennkörper zu ermöglichen.

In allen Ausgestaltungen weist wenigstens eine Strömungsbahn einen flachen Querschnitt in Strömungsrichtung auf, wobei dieser Querschnitt gerade oder bogenförmig sein kann. Insbesondere ist eine Breite der Strömungsbahn mehr als doppelt so groß und insbesondere wenigstens viermal so groß wie eine Höhe der Strömungsbahn in Richtung der Feldlinien. Insbesondere ist die Länge der Strömungsbahn in Strömungsrichtung größer als eine Höhe der Strömungsbahn quer zur Strömungsrichtung. Durch einen flachen Spalt als Strömungsbahn wird eine effektive Beeinflussung der magnetorheologischen Partikel in dem magnetorheologischen Fluid ermöglicht, sodass eine fein gestufte bzw. kontinuierliche Einstellung des Durchflusswiderstandes durch den Strömungskanal bis hin zur Blockade ermöglicht wird.

In allen Ausgestaltungen ist es besonders bevorzugt, dass wenigstens eine Magnetfelderzeugungseinrichtung als elektrische Spuleneinrichtung ausgebildet ist, der wenigstens ein Kern aus einem ferromagnetischen Material zugeordnet ist. Insbesondere sind die elektrische Spuleneinrichtung und der Kern mit dem Trennkörper über das sich verfestigende Medium vergossen.

Eine elektrische Spuleneinrichtung ermöglicht eine flexible und schnelle und definierte Änderung des wirkenden Magnetfeldes in kurzer Zeit, sodass beispielsweise eine Echtzeitsteuerung der Beeinflussung des Durchflusswiderstandes durch den Strömungskanal der Trenneinrichtung ermöglicht wird.

In besonders bevorzugten Ausgestaltungen weist der Kern quer zu seiner Längsachse wenigstens eine seitliche Einschnürung auf. Diese Einschnürung kann auf einer oder mehreren Längs- und / oder Stirnseiten des Kerns oder vollständig um den Kern herum umlaufend ausgebildet sein. Dadurch wird ein geringerer Bauraum ermöglicht, der bei bauraumsensitiven Baugruppen erhebliche Vorteile bietet.

Durch die Einschnürung wird das ferromagnetische Material des Kerns, dessen Sättigungsflussdichte üblicherweise deutlich höher ist als die Sättigungsflussdichte des strömenden Fluids, besser genützt. Zudem kann die mittlere Windungslänge der Spule verringert werden, was deren elektrischen Eigenschaften wesentlich verbessern kann.

Vorteilhafterweise ist der Kern von einem Spulenhalter umgeben, an der die elektrische Spuleneinrichtung aufgenommen ist.

Der Spulenhalter kann beispielsweise aus einem Kunststoff bestehen und erleichtert das Wickeln der Spule. Gleichzeitig wird beim Wickeln oder beim späteren Betrieb eine Beschädigung der Windungen an den Kanten des Eisenkerns vermieden. Es ist auch möglich, die Spule direkt auf den Spulenhalter zu wickeln und den Kern später einzufügen. Vorzugsweise erlaubt der Spulenhalter eine koaxiale Positionierung, wenn der Trennkörper beispielsweise als Kolben ausgebildet ist.

Vorzugsweise ist wenigstens eine Strömungsbahn zwischen einer Polkappe des Kerns und der Feldschließeinrichtung angeordnet. Eine solche Ausgestaltung ermöglicht eine besonders effektive Ausnutzung des Magnetfeldes, welches aus der Polkappe austritt, die Strömungsbahn durchquert und über die Feldschließeinrichtung zurückgeführt wird, sodass eine effektive Baugruppe zur Verfügung gestellt wird.

Insbesondere ist wenigstens eine Polkappe abgerundet und vorzugsweise im Wesentlichen als Zylindersegment ausgebildet und grenzt wenigstens im Wesentlichen an eine Strömungsbahn an.

In bevorzugten Ausgestaltungen ist der Trennkörper als Kolben ausgebildet und ist als solcher in einer Kolbenführung bewegbar angeordnet. Vorzugsweise ist der Kolben mit einer Kolbenstange verbunden. Der Kolben kann aber auch mit beidseitigen Kolbenstangen - also einer sogenannten durchgehenden Kolbenstange - verbunden sein. Vorzugsweise wird wenigstens eine Kolbenstange auf-, ein- oder angeschraubt.

Bei solchen Ausgestaltungen ist es bevorzugt, dass die elektrische Spuleneinrichtung quer zu einer Längsachse der Kolbenführung ausgerichtet ist. Das bedeutet, dass die elektrische Spuleneinrichtung nicht parallel zur Kolbenbewegung, sondern insbesondere senkrecht dazu angeordnet ist. Die Spulenrichtung kann aber auch parallel zur Kolbenbewegung ausgeführt werden (koaxiale Spule).

Vorzugsweise ist eine Achse der elektrischen Spuleneinrichtung quer zu einer Längsachse der Kolbenführung ausgerichtet. Die Feldschließeinrichtung bildet vorzugsweise einen Kolbengrundkörper. Der Kolbengrundkörper besteht beispielsweise aus einem ferromagnetischen Material wie einem Eisenwerkstoff.

Die Feldschließeinrichtung umgibt bei solchen Ausgestaltungen vorzugsweise die elektrische Spuleneinrichtung in Umfangsrichtung des Kolbens. Dadurch kann bei einer liegenden Anordnung der elektrischen Spuleneinrichtung, wenn die elektrische Spuleneinrichtung quer zur Längsachse des Kolbens angeordnet ist, die Feldschließeinrichtung das Feld effektiv schließen, sodass ein einfacher und effektiver Aufbau ermöglicht wird.

In allen Ausgestaltungen ist es besonders bevorzugt, dass der Kolbengrundkörper wenigstens einen Hinterschnitt, Riefen, Nuten, Unebenheiten, sehr raue Oberfläche oder dergleichen aufweist, die wenigstens teilweise mit dem sich verfestigendes Medium bzw. der Verguss- oder Einspritzmasse gefüllt sind. Durch eine solche Ausgestaltung wird eine besonders feste Verbindung innerhalb des Trennkörpers gewährleistet, sodass auch bei hohen und höchsten Differenzdrücken auf beiden Seiten des Trennkörpers von 100, 200, 400 oder sogar 600 bar die Baugruppe ausreichend stabil ist.

Weitere Vorteile und Eigenschaften der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: einen schematischen Querschnitt durch eine als Dämpfer ausgeführte erfindungsgemäße Baugruppe;
- Fig. 2: einen schematischen Querschnitt durch eine Baugruppe 1;
- Fig. 3: einen Querschnitt durch die Baugruppe nach Fig. 2 senkrecht zur Darstellung nach Fig. 2;
- Fig. 4: einen Kolben für eine erfindungsgemäße Baugruppe;
- Fig. 5: einen Kern für die Baugruppe nach Fig. 2;
- Fig. 6: eine Trennwand für die Baugruppe nach Fig. 2;
- Fig. 7: den Kern mit einem Spulenhalter und Trennwänden für die Baugruppe nach Fig. 2;
- Fig. 8: eine perspektivische Darstellung der Baugruppe 1 ohne Feldschließeinrichtung;
- Fig. 9: eine perspektivische Darstellung der Baugruppe 1 ohne die Feldschließeinrichtung;
- Fig. 10: eine schematische Darstellung eines Stapels;
- Fig. 11: eine stark schematische Querschnittsdarstellung einer anderen Baugruppe;
- Fig. 12: eine stark schematische Vorderansicht einer weiteren Baugruppe; und
- Fig. 13: eine Querschnittsdarstellung der Baugruppe nach Fig. 12.

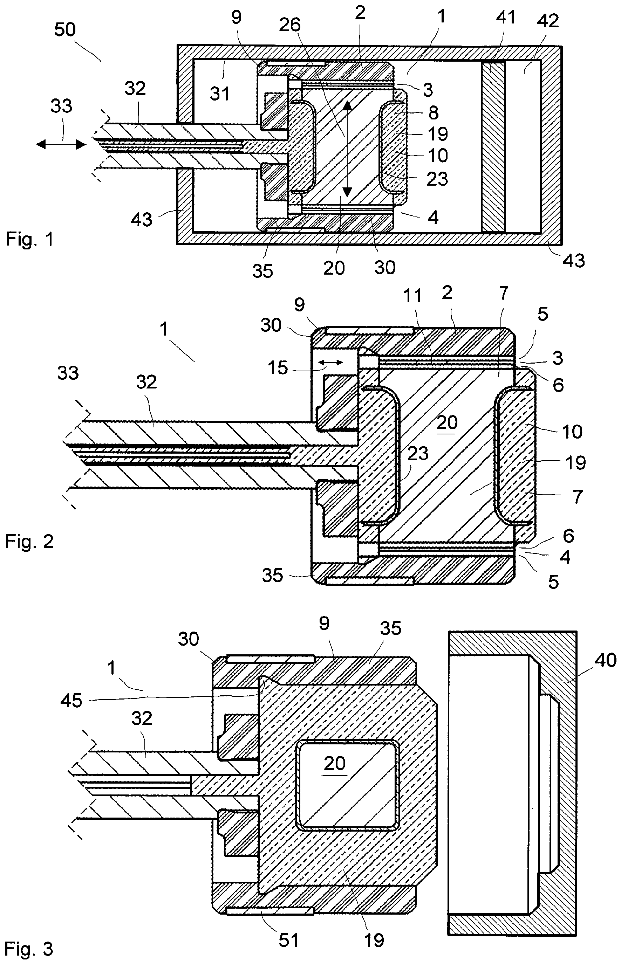

In Fig. 1 ist ein erfindungsgemäßer Dämpfer 50 in einem stark schematischen Querschnitt abgebildet. Der Dämpfer 50 weist ein Gehäuse 43 auf, in dem die Baugruppe 1 als Kolben 30 fungiert. An dem Kolben 30 ist eine Kolbenstange 32 angeschlossen, die sich aus dem Gehäuse 43 nach außen erstreckt.

Es ist ebenso möglich, dass ein erfindungsgemäßes Ventil zur Verfügung gestellt wird. Die Erfindung ist nicht auf den Aufbau eines Dämpfers beschränkt, sondern kann auch auf ein Ventil ausgerichtet sein. Dabei kann ein solches Ventil z. B. auch - aber nicht nur - in einem, Dämpfer eingesetzt werden. Beispielsweise als Ventil für einen Dämpfer in dem Kolben oder als externes Ventil.

Bei dem Dämpfer 50 in Fig. 1 ist zum Ausgleich des Volumens der Kolbenstange 32 ein Ausgleichsraum 42 vorgesehen, der über einen Trennkolben 41 von dem restlichen Volumen des Dämpfers 50 getrennt ist. Es kann auch an beiden Stirnseiten des Kolbens jeweils eine Kolbenstange verwendet werden, wodurch der Ausgleichsraum und der Trennkolben entfallen kann. Die Dichtung 51 dient als Dichtmittel (Gleitdichtung) zwischen dem sich bewegenden Kolben 35 und dem Gehäuse 43. Die Dichtung 51 kann auch eine Permanentmagnetdichtung sein.

Die als Kolben 30 dienende Baugruppe 1 dient als Trennkörper 2 und verfügt über eine Magnetfelderzeugungseinrichtung 8, die hier als elektrische Spuleneinrichtung 19 ausgebildet ist.

In dem Schnitt gemäß Fig. 1 ist der Kern 20 zu erkennen, der von einem Spulenhalter 23 aus Kunststoff umgeben ist. Um den Spulenhalter 23 ist die elektrische Spuleneinrichtung herumgewickelt.

Der Kolben 30 umfasst den Kolbengrundkörper 35, der gleichzeitig als Feldschließeinrichtung 9 dient und hier als Ringleiter ausgebildet ist. In der Darstellung gem. Fig. 1 sind die Strömungskanäle 3 und 4 zu sehen, die über Trennwände 11 hier in jeweils zwei Strömungsbahnen 5 und 6 aufgeteilt sind.

Fig. 2 zeigt in etwas vergrößerter Darstellung eine Baugruppe 1, die hier ebenfalls als Kolben 30 ausgeführt ist. Der Kolben 30 ist mit einer Kolbenstange 32 verbunden. Der Kolbengrundkörper 35 und der Kern 20 und der Spulenhalter 23 bilden jeweils Komponenten 7, die hier innerhalb des Trennkörpers 2 über das sich verfestigende Medium 10 in Form z. B. einer Vergussmasse 10 oder eines Kunststoffes miteinander verbunden sind. Eine Strömung durch den Kolben 30 kann durch die Strömungskanäle 3 und 4 in Strömungsrichtung 15 erfolgen.

Fig. 3 zeigt die Baugruppe 1 gem. Fig. 2 in einem Schnitt, der senkrecht zu dem Schnitt gem. Fig. 2 angeordnet ist. Hier ist der Kern 20 entlang seiner Längserstreckung 26 abgebildet. Der Kern 20 wird von der Spuleneinrichtung 19 umgeben, deren einzelne Windungen hier im Wesentlichen parallel zur Blattebene verlaufen. In dem Kolbengrundkörper 35 ist ein Hinterschnitt 45 oder eine Nut vorgesehen, die bei dem Vergießen oder Verspritzen sich mit dem sich verfestigenden Medium 10 gefüllt hat. Nach dem Aushärten bildet der Hinterschnitt 45 einen effektiven Schutz (Formschluss), der ein Hinausziehen bzw. Herausdrücken der elektrischen Spuleneinrichtungen 19 aus dem Kolbengrundkörper 35 auch bei hohen Drücken zuverlässig verhindert.

Zusätzlich ist in Fig. 3 noch eine Form 40 dargestellt, in die die Baugruppe 1 bei der Montage eingeführt wird, bevor das sich verfestigende Medium zugegeben wird, um eine hydraulisch dichte Verbindung innerhalb des Trennkörpers 2 zu gewährleisten. Die Form 40 weist eine an die vorgesehene Außenform der Baugruppe 1 angepasste Gestalt auf. Durch die Außenform kann der Kolben und insbesondere der Anströmbereich der Strömungskanäle 3, 4 strömungstechnisch optimiert werden, dabei kann das sich verfestigende Medium 10 in Form von z. B. der Vergussmasse annähernd den gesamten stirnseitigen Bereich des Kolbengrundkörpers 35 bedecken.

Analog zur Form 40 können zusätzliche Formen verwendet werden, beispielsweise um den gegenüberliegenden Bereich zu gestalten. Insbesondere die in Fig. 3 vom Kolbengrundkörper gebildeten Strömungskanäle und die Befestigung der Kolbenstange kann auch durch ein entsprechend geformtes sich verfestigendes Medium erfolgen.

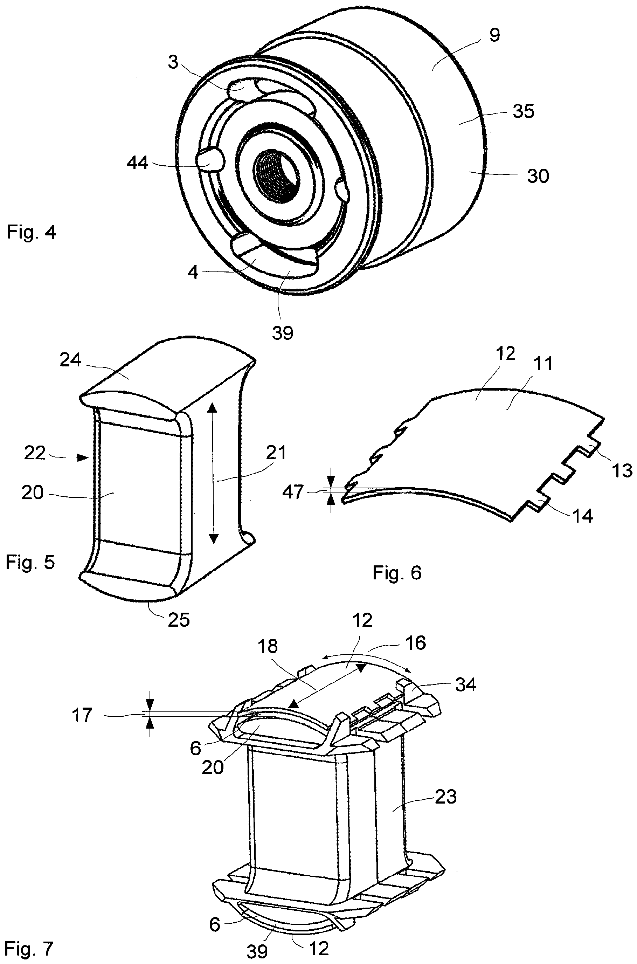

Fig. 4 zeigt einen Kolbengrundkörper 35 für die Baugruppe 1 gem. Fig. 2 oder Fig. 1. Der Kolbengrundkörper 35 dient hier als Feldschließeinrichtung und leitet das Magnetfeld nach dem Durchtritt durch den Strömungskanal wieder zurück. Deutlich erkennbar sind hier die Strömungskanäle 3 und 4. Die Strömungskanäle 3 und 4 weisen jeweils einen flachen Querschnitt 39 auf. Weiterhin sind Montagelöcher 44 vorgesehen, die beispielsweise zur Handhabung mit einem passenden Werkzeug dienen. Die Ein-und Ausströmkonturen der Strömungskanäle 3 und 4 können durch Runden der Kanten, Profilierungen usw. strömungstechnisch vorteilhaft ausgeführt werden.

Nicht dargestellt ist eine bei kostensensitiven Anwendungen bevorzugte Ausgestaltung, bei der auf den ferromagnetischen Kolbengrundkörper 35 verzichtet wird bzw. dieser aus Kunststoff oder einem vergleichbaren Material bestehen kann. Dabei kann der Kolbengrundkörper in dem Arbeitsschritt hergestellt werden, in welchem die Spule vergossen oder umspritzt und die Trennwände fixiert werden. Besonders vorteilhaft ist es, im gleichen Arbeitsgang die Kolbenstange mit zu vergießen oder einzuspritzen.

Bei einem solchen Aufbau kann der Magnetkreis durch das Gehäuse 43 geschlossen werden. Wenn die Trennwände bzw. die Strömungskanäle radial ganz außen am Kolben liegen, befindet sich kein Kunststoff oder keine Vergussmasse im Magnetkreis.

Möglich ist es auch, nebst dem im Magnetfeld liegenden Strömungskanal 3 (und 4) zumindest einen nicht im Magnetfeld liegenden Strömungskanal z. B. in Form einer einfachen Bohrung mittels der zuvor beschriebenen Verfahren zu erzeugen (Bypasskanal). Eine mögliche Position wäre stirnseitig gesehen zwischen den Kanälen 3 und 4 als Verlängerung der Montagebohrung 44, sodass ein Bypasskanal entsteht. Beispielsweise kann dies durch einen Platzhalter 29 in Form eines einfachen Drahtes geschehen, der nach dem Vergussvorgang entfernt wird. Dieser Draht kann beispielsweise zwischen 0,1 mm und 10 mm stark sein. Der Platzhalter 29 kann auch ummantelt sein, wobei sich die Mantelaußenfläche mit der Vergussmasse verbindet und der Platzhalter (Draht) herausgezogen werden kann. Dadurch kann auf ein Trennmittel zum leichteren Entfernen verzichtet werden, was den Vorgang erleichtert. Die Mantelinnenfläche kann vorzugsweise mit einer Gleitschicht versehen sein, wodurch das Herausziehen erleichtert wird.

Fig. 5 zeigt den Kern der Baugruppe 1 aus Fig. 2 in separater und vergrößerter Darstellung. Die Polkappen 24 und 25 sind abgerundet und hier an den Radius des Kolbens 30 bzw. an den Innenradius der Strömungskanäle 3 und 4 angepasst. Die Polkappe 24 grenzt an den Dämpfungskanal 3 und insbesondere an die Strömungsbahn 6 des Strömungskanals 3 an. Die Polkappe 25 grenzt hier direkt an die Strömungsbahn 6 des Strömungskanals 4 an. Möglich ist es auch, dass die Polkappen 24 und 25 beispielsweise mit einer dünnen Schicht beschichtet sind, sodass ein geringer Abstand zwischen der eigentlichen Polkappe 24 bzw. 25 und dem Strömungskanal 3 bzw. 4 besteht.

Der Kern 20 kann auch aus mehreren Teilen hergestellt sein, wobei diese Kernteile unterschiedliche magnetische Eigenschaften haben können. Dabei können Bereiche des Kerns hartmagnetisch und andere Bereiche magnetisch nicht leitend (nicht ferromagnetisch) sein. Durch den mehrteiligen Aufbau des Kerns wird es auch möglich, den Kern erst nach dem Wickeln der Spule in den Spulenhalter 23 einzufügen.

Fig. 6 zeigt eine als Trennblech 12 ausgeführte Trennwand 11, die hier über Rasteinrichtungen 13 in Form von Rastzähnen 14 verfügt. Mit den Rasteinrichtungen 13 bzw. den Rastzähnen 14 verhakt sich die Trennwand 11 beim Vergießen mit dem sich verfestigenden Medium, sodass die Trennwand 11 definiert, örtlich fixiert und sicher in der Baugruppe 1 aufgenommen wird.

Auf das Trennblech 12 kann im Mittelbereich und vorzugsweise beidseitig wenigstens eine Folie, Klebeband, Schicht oder Lack aufgebracht werden, welche während des Vergießens den Platzhalter bildet und danach chemisch aufgelöst, weggeätzt oder ausgeschmolzen wird. Dadurch entsteht der Strömungskanal. Der Platzhalter kann auch aus einem eutektischen Metall bestehen, welches nach dem Vergießen aufgeschmolzen und wieder entfernt wird.

Fig. 7 zeigt den von einem Spulenhalter 23 umgebenen Kern 20, an dem zusätzlich zwei Trennbleche 12 angelegt sind. Zwischen den Polkappen 24 und 25 und den Trennblechen 12 ist jeweils eine Strömungsbahn 6 der Strömungskanäle 3 und 4 zu sehen. An dem Spulenhalter 23 sind Rastmittel 34 vorgesehen, die zur definierten Aufnahme der Trennwände 11 dienen.

Der Kern 20 weist quer zu seiner Längsachse 21 hier Einschnürungen 22 auf, sodass Bauvolumen in axialer Richtung des Kolbens 30 gewonnen wird. Durch die Einschürungen 22 dehnt sich die Spule 19 in axialer Richtung weniger aus, sodass eine axial kürzere Baugruppe 1 ermöglicht wird.

Die Strömungskanäle 3 und 4 weisen hier eine Länge 18 in Strömungsrichtung 15 auf, die erheblich größer ist als eine Höhe 17 in Richtung der Längsachse 21 des Kerns 20. Die Breite 16 der Strömungsbahnen 5 bzw. 6 der Strömungskanäle 3 und 4 erstreckt sich hier entlang einer gekrümmten Linie und ist ebenfalls erheblich größer als die Höhe 17 der einzelnen Strömungsbahnen 5 und 6.

Typische Werte für die Länge 18 der Strömungskanäle 3 und 4 liegen zwischen etwa 10 und 60 mm. Die Breite 16 liegt meist zwischen etwa 5 mm und 20 mm und bevorzugte Kanalhöhen 17 liegen zwischen etwa 0,2 und 2 mm.

Dabei können mehrere Strömungsbahnen vorgesehen sein. Z. B. können fünf, sieben, acht, neun oder zehn Strömungsbahnen einem Strömungskanal zugeordnet sein. Möglich ist es auch, dass drei, vier oder mehr Strömungskanäle vorgesehen sind. Typischerweise beträgt die Wandstärke der Trennwände 11 zwischen 0,1 mm und 1 mm.

Der freie Strömungsquerschnitt als Summe aller Strömungskanäle ist abhängig von der Kanalform, dem verwendeten Fluid, der Kolbenfläche und dem gewünschten Kraftbereich. Typische Strömungsquerschnitte liegen im Bereich zwischen etwa 10 mm² und etwa 200 mm². Mittlere Strömungsgeschwindigkeiten von bis zu 30 m/sec oder sogar 60 m/sec oder mehr sind möglich. Der Volumenstrom hängt selbstverständlich von den Abmessungen ab und kann in einigen Beispielen 100 ml/sec erreichen und überschreiten. Dabei sind auch Werte von 200 ml/sec oder 300 ml/sec und noch mehr möglich. Die elektrische Spuleneinrichtung 19 kann aus unterschiedlichen Materialien bestehen. Beispielsweise kann sie aus Kupfer oder auch aus eloxiertem Aluminium oder dergleichen ausgebildet sein. Es können auch mehrere Spuleneinrichtungen 19 vorgesehen sein.

Das Trennblech 12 kann auch eben ausgeführt werden, was zusammen mit einem Kern 20 mit ebenen Polkappen 24 einen dazwischenliegenden ebenen Strömungskanal ergibt.

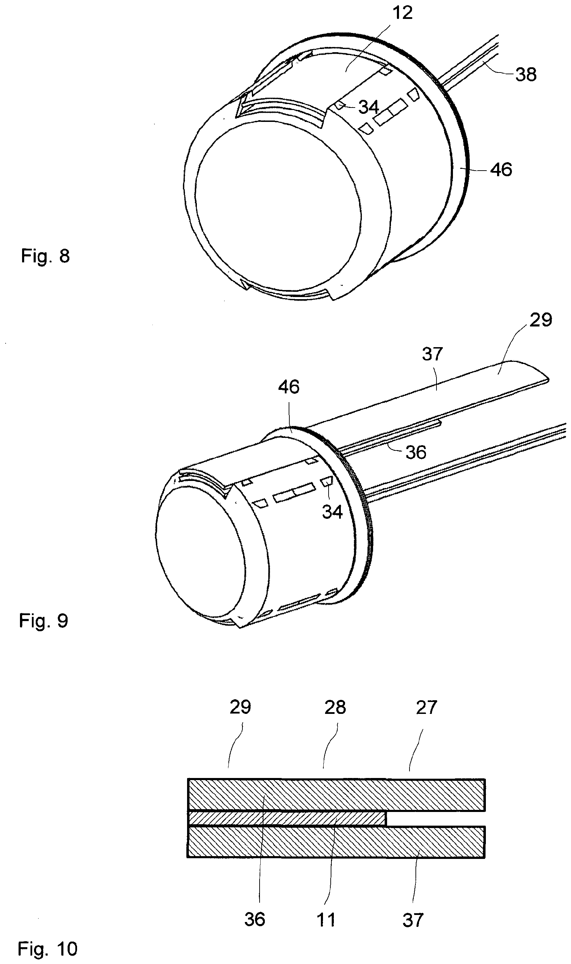

In Fig. 8 ist eine Baugruppe 1 ohne den Kolbengrundkörper 35 in perspektiver Darstellung abgebildet. Klar erkennbar sind die Kabel 38, die zu der elektrischen Spuleneinrichtung 19 im Inneren führen und die Trennbleche 12, die die Strömungskanäle 3 und 4 in jeweils zwei Strömungsbahnen 5 und 6 aufteilen. Die Rastmittel 34 zur axialen Fixierung der Trennwände 11 bzw. Trennbleche 12 sind erkennbar und liegen im fertig montierten Zustand an der Innenseite des Kolbengrundkörpers 35 an. Fig. 8 und auch Fig. 9 zeigen den Zustand nach dem Vergießen mit dem sich verfestigenden Medium, wobei jeweils zur besseren Übersichtlichkeit in den Darstellungen der Kolbengrundkörper 35 weggelassen wurde.

Deutlich erkennbar ist auch der Absatz 46, der aus dem sich verfestigenden Medium 10 und hier aus der Vergussmasse oder einem eingespritzten Kunststoff 10 besteht und den Hinterschnitt 45 im Kolbengrundkörper 35 ausfüllt.

In Fig. 9 sind die Platzhalter 29 in Form von Trennlehren 36 und 37 noch in die Braugruppe 1 eingeführt. Nach dem Aushärten können die Trennlehren 36 und 37 entfernt werden, sodass die Strömungskanäle 3 und 4 bzw. Strömungsbahnen 5 und 6 mit genau definierten Abmessungen übrig bleiben. Dazu werden die Trennlehren 36 und 37 in axialer Richtung herausgezogen. Die Trennlehren können auch Bestandteil der Form 40 nach Figur 3 sein. Mit oder nach dem Entfernen der Form 40 werden auch die Trennlehren in axialer Richtung herausgezogen.

Die mitunter wiederverwendbaren Trennlehren 36 und 37 können beispielsweise durch einen Schleifvorgang oder dergleichen exakt auf die gewünschten Abmessungen gebracht werden, sodass reproduzierbar hochgenaue Baugruppen 1 gefertigt werden können.

Möglich ist es auch, die Platzhalter 29 bzw. die Trennlehren 36 und 37 z. B. chemisch aufzulösen oder aufzuschmelzen. Dann werden für jede Baugruppe neue Trennlehren 36 und 37 benötigt. Das aufgeschmolzene Material kann aber direkt oder nach einer Reinigung oder Abfilterung wieder verwendet werden.

Möglich ist es auch, den Platzhalter 29 bzw. die Trennlehren 36 und 37 mit einem beweglichen Mantel/Hülle zu umgeben, wobei sich die Mantelaußenfläche mit der Vergussmasse verbindet und der Platzhalter 29 herausgezogen werden kann. Fig. 10 zeigt einen Stapel 28 als Platzhalter 29, der als Einsatz in einer Baugruppe 1 dient. Dazu wird zunächst die Trennlehre 36 oder 37 aufgelegt und anschließend wird die Trennwand 11 aufgebracht, bevor die zweite Trennlehre 37 bzw. 36 aufgelegt wird. Zusammen mit dem Kern 20, der von dem Spulenhalter 23 und der Spule 19 umgeben ist, wird der Einsatz 27 in den Kolbengrundkörper 35 eingeführt. Beides wird in die Form 40 eingeführt, bevor die Hohlräume mit dem sich verfestigenden Medium 10 aufgefüllt werden. Um Lufteinschlüsse zu vermeiden, kann unter Vakuum und/oder unter Überdruck gearbeitet werden.

In den gleichen Bauraum kann, statt dem zuvor beschriebenen, aus einer Trennwand 11 und je einer Trennlehre 36 und 37 bestehendem, Stapel 28 auch ein Stapel aus z. B. zwei dünneren Trennwänden kombiniert mit drei dünneren Trennblechen eingebaut werden. Die Abmessungen und Ausformungen des Kerns 20, des Kolbengrundgehäuses 35 und des Spulenhalters 23 samt Spule 19 müssen hierfür nicht verändert werden, das sich verfestigende Medium gleicht die Unterschiede aus und fixiert beim Verfestigen alle Bauteile. Somit lassen sich unterschiedliche Strömungskanaldesigns (Varianten) ohne großen Aufwand herstellen.

Ein Stapel kann eine beliebige Anzahl von Trennwänden 11 enthalten, wobei typische Stapel eine bis zehn oder zwanzig oder mehr Trennwände enthalten können. Zur Montage werden üblicherweise die Anzahl Trennwände +einen Platzhalter 29 verwendet.

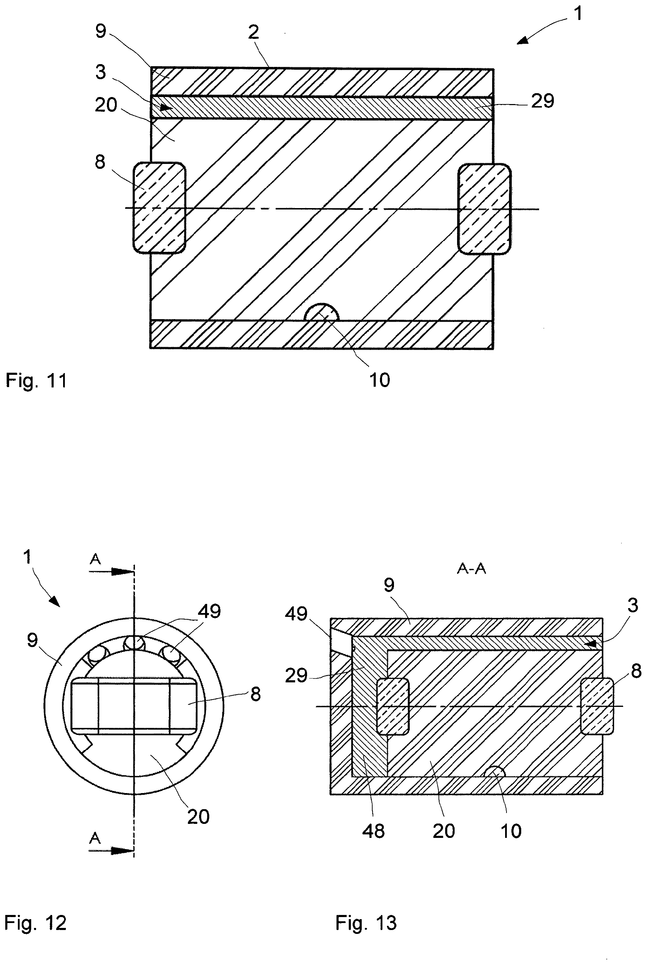

Fig. 11 zeigt eine stark schematische Querschnittsdarstellung einer anderen erfindungsgemäßen Baugruppe 1, welche einen Trennkörper 2 umfasst. Der Trennkörper 2 weist eine Feldschließeinrichtung 9, einen Strömungskanal 3 in dem Trennkörper 2, einen Kern 20 und eine elektrische Spule als Felderzeugungseinrichtung 8 auf. Der Trennkörper 2 ist mittels eines sich verfestigenden Mediums 10 verfüllt. Vor dem Verfüllen wurde ein Einsatz 27 als Platzhalter 29 eingebracht. Der Platzhalter 29 sorgt für die Ausbildung eines räumlich definierten und reproduzierbaren Strömungskanals 3 in dem Trennkörper 2. Der Platzhalter kann als Trennlehre ausgebildet sein oder aus einem auswaschbaren, schmelzbaren oder lösbaren Material bestehen, welches nach dem Verfestigen oder Aushärten wieder entfernt wird. Der Platzhalter kann folglich aus Metall bestehen oder aber z. B. aus Wachs gefertigt sein.

Damit eine druckfeste Verbindung (Dichtheit...) zwischen der Komponente 7 und der Feldschließeinrichtung 9 in den nicht komplett umgossenen Bereichen gewährleistet ist (z. B. gegenüber dem Strömungskanal), hat der Kern 20 in diesen Bereichen zumindest eine Ausnehmung, welche beim Vergießvorgang mit Vergussmasse bzw. dem Medium 10 gefüllt wird.

Fig. 12 zeigt eine stark schematische Vorderansicht einer weiteren Baugruppe 1, die wie bei dem Beispiel nach Fig. 11 einen Strömungskanal 3 mit nur einen einzigen Strömungsbahn umfasst.

Der Strömungskanal 3 ist hier nicht unterteilt. Fig. 13 zeigt eine Querschnittsdarstellung der Baugruppe 1 nach Fig. 12. Der Trennkörper 2 weist wiederum eine Feldschließeinrichtung 9, einen Strömungskanal 3 in dem Trennkörper 2, einen Kern 20 und eine elektrische Spule als Felderzeugungseinrichtung 8 auf.

Zwischen der Magnetfelderzeugungseinrichtung 8 und der inneren Stirnseite der Feldschließeinrichtung 9 muss ein Raum frei bleiben. Dies wird dadurch erreicht, dass z. B. ein Platzhalter 29 aus Wachs eingelegt wird. Nach dem Vergießen wird dieser durch Ausschmelzen entfernt. Statt Wachs können auch andere für Vergießverfahren übliche Materialien verwendet werden. Der Platzhalter 29 kann auch so ausgeformt sein, dass dieser den Strömungskanal entsprechend ausformt. Der freizuhaltende Raum oder eine Vielzahl davon kann an jeder beliebigen Position der Baugruppe sein.

Als Platzhalter 29 können auch andere schmelzbare Medien Thermoplaste etc. eingesetzt werden, um den Platzhalter 29 nach dem Verfüllen wieder durch Aufschmelzen entfernen zu können.

Hier ist an einem Ende des Trennkörpers 2 ein Sammelraum 48 vorgesehen, der über mehrere und hier drei Öffnungen 49 mit der benachbarten Kammer verbunden ist. Es ist auch möglich, dass zwei unterschiedliche Platzhalter 29 eingesetzt werden, nämlich z. B. eine Trennlehre 36 zur Ausbildung des Strömungskanals 3 und ein weiterer Platzhalter, um den Sammelraum 48 auszubilden.

Die Feldschließeinrichtung 9 kann an einer oder beiden Stirnseiten mit Gewinden versehen werden, an welcher z.B. eine Kolbenstange befestigt wird.

Durch die definierte Arbeitsweise und die definierten Abmessungen der Trennwände und der Trennlehren können hochgenaue Baugruppen kostengünstig und einfach in größeren Stückzahlen hergestellt werden. Durch die genauen Toleranzen ist es auch möglich, einen Strömungskanal in viele Strömungsbahnen aufzuteilen, die durch die Trennwände als Fächer voneinander getrennt werden. Da alle Einzelteile hoch genau gefertigt werden, ist die Summentoleranz niedrig. Das ist sehr vorteilhaft, da bei unterschiedlichen Abmessungen der einzelnen Strömungskanäle oder Strömungsbahnen erhebliche Belastungen auf die einzelnen Strömungsbahnen bzw. Strömungskanäle wirken können, die zu einer Verbiegung von Trennwänden 11 oder Trennblechen 12 führen können.

In allen Fällen können die Trennwände als gebogene Fächer in einem Rundkolben ausgeführt sein. Die Kolbenstange kann verschraubt oder verklebt sein.

Wenn viele Trennwände 11 als Fächer gestapelt werden, summieren sich die Einzeltoleranzen zu einer größeren Summentoleranz, welche beim Serienteil nachteilig sein kann. Dann kann die Performance einzelner Aktuatoren stark unterschiedlich sein. Die Einzelteile hochgenau zu fertigen, sodass die Summentoleranz nieder ist, ist aufwendig und in der Serie teuer. Die Erfindung stellt eine vorteilhafte Baugruppe 1 und ein vorteilhaftes Verfahren zur Herstellung zur Verfügung. Damit ist es möglich, mit in Massen produzierbaren Einzelteilen mit unter Umständen sogar größeren Toleranzen (= billiger) eine Baugruppe mit niederen Gesamttoleranzen zur Verfügung zu stellen.

Insbesondere können auch alle Komponenten auch bei großen Drücken/Kräften hydraulisch dicht sein.

Die Baugruppe kann adaptiv durch Magnetfeldänderungen reagieren, sodass sich quasi eine Viskositätsänderung der Flüssigkeit ergibt. Das Schalten hoher Drücke ist ein wesentlicher Vorteil der Fächerkonstruktion (bei kleinem Bauraum, v.a. kurzer Länge).

Die Trennwände 11 - auch Fächer genannt - werden oft dünn ausgeführt und haben in bevorzugten Ausgestaltungen Dicken 47 zwischen etwa 0,3 mm und 0,7 mm. Dadurch können Bauraum und Bauhöhe gespart werden. Die Höhe 17 der Strömungsbahnen 6, 7 liegt insbesondere zwischen 0,2 mm und 2 mm. Bei bestimmten Konstruktionen wie z. B. Energieabsorbern für Lenkungen können viele und konkret z. B. vierzehn Trennwände 11 als Fächer übereinander gestapelt werden. Bei zwei solcher Pakete können in Summe 30 Kanäle oder mehr zur Verfügung gestellt werden, die mit Drücken von bis zu 600 bar bzw. daraus resultierenden hohen Flächenlasten von 60N/mm2 oder mehr beaufschlagt werden.

Wenn aber die Strömungsbahnen 6, 7 jeweils stark unterschiedliche Abstände aufweisen, ergibt sich daraus bei Anlegen eines Magnetfeldes eine abweichende Magnetfeldstärke: Das Magnetfeld in der höheren Strömungsbahn ist niedriger als im nicht so hohen Spalt bzw. in der niedrigeren Strömungsbahn. Das unterschiedliche Magnetfeld beeinflusst die magnetorheologische Flüssigkeit unterschiedlich und es stellt sich in der höheren Strömungsbahn ein niederer Druck und in der niedrigeren Strömungsbahn ein höherer Druck ein. Das kann zu erheblichen Querbelastungen der Trennwände 11 führen, die sich verbiegen und sogar zerstört werden können.

Aber unabhängig davon ist auch bei absolut gleichem Magnetfeld die Höhe des Spaltes bzw. der Strömungsbahn in Richtung der Feldlinien entscheidend, da einer geringere Höhe zu einem höheren möglichen Sperrdruck führt. Unterschiedliche Höhen unterschiedlicher Strömungsbahnen führen zu unterschiedlichen Sperrdrücken und dadurch zu Druckdifferenzen.

Die Druckunterschiede zwischen einzelnen Trennwänden 11 führen zu Kraftunterschieden auf die Trennwände 11, was zu Verformungen der dünnen Fächer 12 führen kann. Besonders bei hohen Drücken kann eine solche Verformung zu Materialüberlastungen und mangelnder Funktion des Aktors führen. Dies kann sogar weit gehen, dass sich zwei Trennbleche 12 aufgrund der Verformung berühren, was zum magnetischen Kurzschluss und damit zum fast kompletten Druckabfall in den einem Strömungskanal oder in einer Strömungsbahn führt. Unbeabsichtigte Undichtigkeiten einzelner Kanäle (Leckage) können gegebenenfalls ähnliche Belastungen bzw. Nachteile verursachen.

Die Erfindung ermöglicht durch gleiche Anströmung das Vermeiden eines Verbiegens der Trennbleche 12.

Ein Vorteil des Vergießens oder Verklebens der elektrischen Spuleneinrichtung 19 mit den Trennwänden 11 ist, dass beim Vergießen auch noch die Trennwände 12 fixiert werden.

Durch die Verzahnung im seitlichen Außenbereich der Trennwände 11 ist ein Formschluss in dem Trennkörper 2 möglich. Durch die Einschnürung des Eisenkerns 20 kann Bauraum gespart werden, was wichtig für die Hub- und Baulänge ist.

Der Hinterschnitt 45 im Kolben 30 dient zum Formschluss des Paketes aus elektrischer Spuleneinrichtung 19, des Kerns 20, des Spulenhalters mit dem Kolben 30. Der Hinterschnitt 45 kann auch als runder oder eckiger Einstich oder als Verzahnung ausgeführt sein. Der Hinterschnitt garantiert auch die Dichtigkeit.

Gebogene Trennwände 11 bieten hier eine bessere Energieeffizienz. Gerade Trennwände haben Vorteile bei den Herstellkosten.

Der Spulenhalter 23 hält die Trennwände 11 in axialer Richtung vor dem Vergießen. Mit den Trennlehren 36 und 37 werden die Trennwände 11 in radialer Richtung vor dem Vergießen gehalten.

Bei dem Herstellvorgang werden die nicht entformbaren Teile zunächst gereinigt. Die entformbaren Teile werden eingefettet bzw. eingeölt. Auch ein spezielles Trennmittel kann verwendet werden.

Anschließend wird das Kabel 38 angelötet bzw. mit der Spule 19 verbunden. Der Kolben 30 mit der Kolbenstange 32 wird verschraubt und/oder verklebt.

Es wird mit dem Einsatzteil 27 bzw. dem Stapel 28 ein Sandwich von Spule 19, Trennlehren 36 und 37 und Trennwänden 11 zusammengestellt. Durch die insbesondere definierte Dicke der Trennwände 11 Fächerblechs werden alle Toleranzen ausgeglichen.

Das Sandwich wird in den Kolben 30 eingeschoben. Wird als sich verfestigendes Medium eine Vergussmasse oder ein Kunststoff verwendet, wird diese gegebenenfalls aufgewärmt. Bei Verwendung einer Vakuumeinheit wird der Kolben entsprechend positioniert, die Vakuumglocke geschlossen und die Vakuumpumpe eingeschaltet. Durch das Vakuum wird die Luft aus dem Kolben 30 gezogen und das sich verfestigende Medium 10 strömt in den Kolben, sodass so wenig Lufteinschlüsse wie möglich entstehen. Lufteinschlüsse können sich schlecht auf Dichtheit und die Fixierung der Komponenten auswirken.

Nach dem Aushärten kann das Entformen erfolgen, wobei die Trennlehren 36 und 37 aus dem Kolben herausgezogen werden. Die Trennlehren 36 und 37 können auch Teil der Form 40 oder mit der Form trennbar verbunden sein und gemeinsam beim Entformen entfernt werden.

Schließlich werden die Strömungskanäle 3, 4 vom restlichen sich verfestigten Medium oder der Vergussmasse 10 gereinigt, wenn dies notwendig ist.

Die Rasteinrichtungen 13 an den Trennwänden 11 können z. B. rund, drei- oder mehreckig ausgestaltet sein. Widerhaken können vorgesehen sein. Die Zähne können auch verbogen und z B. nach unten geklappt sein.

Die Trennwände 11 bestehen vorzugsweise aus magnetisch leitendem (ferromagnetischem) Material. Die Wandstärke ist vorzugsweise gleichbleibend, kann aber auch unterschiedlich sein. Die Trennwand kann auch über der Breite 16 quer zur Strömungsrichtung oder in Strömungsrichtung gesehen unterschiedlich dick sein (z. B. konisch. Die Trennwände können auch beliebige andere Formen haben, z. B. gewellt. Es können auch zwei oder mehrere Trennwände mit verschiedener Ausgestaltung, Form oder Material hintereinander angeordnet werden. Zwischen den in Strömungsrichtung gesehenen hintereinander angeordneten Trennwänden kann vor dem Vergießen auch ein Spalt gelassen werden, welcher nachher durch das sich verfestigende Medium gefüllt wird. In diesen Spalt kann auch ein Sensor, wie z.B. ein Magnetfeldstärke- oder Temperatursensor integriert und nachfolgend umgossen oder umspritzt werden.

Bei Aktoren mit hohen Drücken können sich aufgrund der Stirnfläche und dem Abführen der Schubspannungen der magnetorheologischen Flüssigkeit (MRF) hohe Kräfte in Strömungsrichtung ergeben. Durch ein überlappendes Vergießen kann diese gut abgeführt werden und wirkt wie ein flächiges Kleben.

Die Oberfläche der Trennwände 11 kann glatt sein, vorzugsweise aber wenigstens bereichsweise rau oder angeraut. Dadurch ergibt sich eine bessere Verbindung mit dem sich verfestigenden Medium.

Der Kern aus einem ferromagnetischen Material kann stirnseitig und/oder seitlich eingeschnürt werden, sodass gei gleichem Bauraum mehr Wicklungen möglich sind. Der Kern kann auch aus hartmagnetischem Material sein, wie z. B. AlNICo oder es kann auch ein Permanentmagnet im Kern integriert werden um ein bestimmtes Magnetfeld ohne Strom zu erzeugen um eine definierte Grundkraft zu erreichen.

Da die Trennlehren 36 und 37 als Platzhalter 29 vorzugsweise mehrmals verwendet werden, können diese hochgenau z. B. durch Schleifen hergestellt werden. Die höheren Herstellkosten der Trennlehren werden so auf viele Bauteile umgelegt.

Um Fertigungstoleranzen nahezu zu eliminieren, werden die genauen Trennlehren mit Trennwänden der richtigen Dicke kombiniert und anschließend montiert.

Die Platzhalter 29 bzw. 36, 37 können auch mit Untermaß gefertigt und so geformt werden, dass sie die Höhentoleranz durch Dickentoleranzen der Trennwände 11 möglichst gleichmäßig auf alle Strömungskanäle aufteilen. Die dabei möglicherweise entstehenden Einschlüsse von sich verfestigendem Medium oder der Vergussmasse in den Strömungskanälen sind üblicherweise sehr dünnwandig und können im Anschluss entfernt werden.

Vorzugsweise wird das Kabel 38 in der Kolbenstange 32 mit vergossen. Zusätzlich zum Kabel 38 können auch weitere Kabel für z. B. Temperatursensoren usw. mitvergossen werden. Dann muss auch die Kolbenstange 32 nicht mehr gedichtet werden. Eine Verdrehsicherung der Kolbenstange kann auch integriert sein. Die Kolbenstange kann im Anschlussbereich derart geformt sein, dass sich durch Überlappungen mit dem sich verfestigenden Medium eine formschlüssige Verbindung mit dem Kolben ergibt.

Alternativ kann das Kabel 38 auch zusätzlich abgedichtet werden (O-Ringe; spezielle Verschraubung etc.). Dafür können direkt an der Spule und/oder dem Kolben Lötstifte oder fertige Steckerteile eingespritzt oder eingegossen werden.

Um die Dichtheit zwischen dem Einlegeteil nach dem Umspritzen mit Kunststoff oder der Vergussmasse 10 sicher zu stellen, können diese mit Schmelzklebstoff oder dergleichen beschichtet sein. Dadurch können entstehende Spannungen zwischen den verschiedenen Komponenten, insbesondere bei Temperaturwechsel, ausgeglichen werden.

Der für die elektrische Spulen 19 verwendete Draht kann mit einem Schrumpfschlauch der innen, außen oder innen und außen mit Schmelzklebstoff beschichtet ist, versehen sein.

Vorzugsweise wird die in Fig. 2 sichtbare Anordnung mit einer "liegenden" elektrischen Spuleneinrichtung 19 eingesetzt, bei der der Spulenhalter 23, der Kern 20 und die Trennwände 11 vergossen werden. Hierzu wird vorzugsweise eine entsprechende Form 40 und insbesondere eine Negativform verwendet. Danach kann diese Einheit in den restlichen Magnetfeldkreislauf wie z. B. ein Kolben 30 oder ein Ventil eingefügt werden. Danach wird eine feste und dichte Verbindung erzeugt, die wenigstens bis zu bestimmten axialen Kräften stabil ist. Die Verbindung kann durch Kleben, Ultraschallschweißen, Schmelzkleber oder ein Gewinde erfolgen.

Möglich ist es auch, durch einen Spritzvorgang die Verbindung herzustellen. Dazu kann auch das sich verfestigende Medium oder die Vergussmasse gespritzt werden. Unter "Vergießen" ist auch ein Spritzen zu verstehen. Vorzugsweise wird mit Kunststoff umspritzt.

In einer Variante wird die Spuleneinrichtung 19 fertig umspritzt und bildet vorzugsweise dabei leicht nach außen abstehende "Fächerhalter" aus. Gemeinsam mit der Trennwand 11 (Fächer) wird die Spuleneinrichtung 19 in den Kolben 30 geschoben, wodurch die Fächerhalter nach innen gedrückt werden und die Trennwand 11 festklemmen.

In einer anderen Variante werden ähnliche Fächerhalter wie zuvor verwendet, die jedoch Teil des Spulenhalters sind. Kern, Spulenhalter mit Spuleneinrichtung 19 und Trennwänden 11 werden in den Kolben geschoben, wobei sich die abstehenden Laschen des Fächerhalters verbiegen und an die Trennwand 11 angepresst werden. Dadurch wird die Trennwand 11 in Position gehalten und der Strömungskanal gegenüber der Spuleneinrichtung 19 abgedichtet, was das Vergießen vereinfacht.

Möglich ist auch ein Ultraschallschweißen, bei dem die den Strömungskanal beeinflussende Einheit gefertigt wird. Nachträglich kann eine Trennwand 11 mittels Ultraschallschweißen eingearbeitet bzw. eingeschweißt werden. Dabei kann die Trennwand 11 stirnseitig oder radial von außen nach innen (in Richtung Kernmitte) in das sich verfestigende Medium oder in die Vergussmasse eingeschallt werden.

Eine alternative Fertigungsmethode sieht vor, den Kern mit Spulenhalter und Spule in einer Form derart mit Kunststoff zu vergießen oder zu umspritzen, dass die Bereiche der Strömungskanäle und Trennwände frei bleiben. Dieses Teil wird in einem weiteren Arbeitsschritt gemeinsam mit den Trennwänden im Kolbengrundkörper befestigt.

Besonders bevorzugt wird der Kunststoff im Bereich der Trennwände mit geringem Übermaß oder durch eine bestimmte Form derart gespritzt, sodass die Trennwände beim Einpressen in den Kolbengrundkörper durch den Kunststoff geklemmt werden.

Die Kunststoffform kann auch Rasthaken und dergleichen aufweisen, um im Kolbengrundkörper einfach fixiert werden zu können. Die Kolbenstange oder Trennwände können ebenso befestigt werden.

Es ist nicht zwingend erforderlich, dass der Trennkörper 2 die komplette Strömung des magnetorheologischen Fluids entlang des sich ergebenden Strömungskanals (3, 4) beeinflusst. Die Konstruktion kann auch einen oder mehrere Strömungskanäle aufweisen, die außerhalb und/oder innerhalb der Baugruppe verlaufen können.

Es ist nicht zwingend erforderlich, dass mehrere Trennbleche 12 innerhalb einer Variante gleiche Abmessungen haben. Diese können auch unterschiedlich sein.

Ein Kern 20 kann auch aus einer Vielzahl von Strömungskanälen mit Trennblechen 12 aufgebaut werden.

In allen Ausgestaltungen kann zumindest eine Trennwand 11 auch mittels mindestens einem schmalen Steg, ohne darauf beschränkt zu sein, fester Bestandteil der Feldschließeinrichtung 9 oder der Magnetfelderzeugungseinrichtung 8 sein, wenn dieser z. B. durch Drahtschneiden, Feinguß oder ein ähnliches Verfahren zur Erzeugung feiner Strukturen hergestellt wird.

Das Magnetfeld muss sich nicht immer über die Feldschließeinrichtung 9 wie z. B. in Fig. 2 dargestellt schließen, sondern kann sich nur über das Bauteil 43 (Zylinder...) schließen. Z. B. kann der Kolben gem. Fig. 8 ohne hinteren Bund 46 direkt in einem Zylinder laufen. Das Magnetfeld kann auch über die Feldschließeinrichtung 9 und das Bauteil 43 (Zylinder...) geschlossen werden. Dann muss aber der Zylinder 43 wenigstens teilweise ferromagnetische Eigenschaften haben.

**Bezugszeichenliste:**

| | | | |
|---|---|---|---|
| 1 | Baugruppe | 25 | Polkappe |
| 2 | Trennkörper | 26 | Achse |
| 3 | Strömungskanal | 27 | Einsatz |
| 4 | Strömungskanal | 28 | Stapel |
| 5 | Strömungsbahn | 29 | Platzhalter |
| 6 | Strömungsbahn | 30 | Kolben |
| 7 | Komponente | 31 | Kolbenführung |
| 8 | Magnetfelderzeugungseinrichtung | 32 | Kolbenstange |
| | | 33 | Längsachse |
| 9 | Feldschließeinrichtung | 34 | Rastmittel |
| 10 | sich verfestigendes Medium | 35 | Kolbengrundkörper |
| | | 36 | Trennlehre |
| 11 | Trennwand | 37 | Trennlehre |
| 12 | Trennblech | 38 | Kabel |
| 13 | Rasteinrichtung | 39 | flacher Querschnitt |
| 14 | Rastzahn | 40 | Form |
| 15 | Strömungsrichtung | 41 | Trennkolben |
| 16 | Breite | 42 | Ausgleichsraum |
| 17 | Höhe | 43 | Gehäuse |
| 18 | Länge | 44 | Montageloch, Bypasskanal |
| 19 | elektrische Spuleneinrichtung | 45 | Hinterschnitt, Nut |
| | | 46 | Absatz |
| 20 | Kern | 47 | Dicke |
| 21 | Längsachse | 48 | Sammelraum |
| 22 | Einschnürung | 49 | Öffnung |
| 23 | Spulenhalter | 50 | Dämpfer |
| 24 | Polkappe | 51 | Dichtung |

## Patentansprüche

1. Verfahren zur Herstellung einer Baugruppe (1) mit einem Trennkörper (2) und wenigstens einem daran vorgesehenen und sich entlang des Trennkörpers (2) erstreckenden Strömungskanal (3, 4) mit wenigstens einer Strömungsbahn (5, 6), um eine Strömung eines magnetorheologischen Fluids entlang des Strömungskanals (3, 4) des Trennkörpers (2) zu beeinflussen,
wobei der Trennkörper (2) wenigstens eine Magnetfelderzeugungseinrichtung (8) zur Erzeugung eines Magnetfeldes und eine Feldschließeinrichtung (9) umfasst, **dadurch gekennzeichnet,**
**dass** die Magnetfelderzeugungseinrichtung (8) und die Feldschließeinrichtung (9) unter Verwendung wenigstens eines Platzhalters (29) zur Ausbildung zumindest eines Teiles des Strömungskanals (3, 4) mit wenigstens einem sich verfestigenden Medium (10) verfüllt wird, um an dem Trennkörper wenigstens einen dreidimensional vordefinierten Strömungskanal (3, 4) auszubilden, der nach der Entfernung des Platzhalters (29) zur Verfügung steht.

2. Verfahren nach dem vorhergehenden Anspruch, wobei die durch das verfestigende Medium gebildete Verbindung hydraulisch druckdicht ist, sodass das magnetorheologische Fluid über den Strömungskanal strömen muss.

3. Verfahren nach dem vorhergehenden Anspruch, wobei ein Kern (20) mit einem Spulenhalter (23) umgeben wird, und wobei auf den Spulenhalter (23) eine elektrische Spuleneinrichtung (19) als Magnetfelderzeugungseinrichtung (8) gewickelt wird und wobei wenigstens eine Trennwand (11) an dem Spulenhalter (23) angeordnet wird.

4. Verfahren nach dem vorhergehenden Anspruch, wobei wenigstens ein Einsatz (27) aus einem Stapel (28) aus einer ersten Trennlehre (36) als Platzhalter (29), wenigstens einer Trennwand (11) und wenigstens einer zweiten Trennlehre (37) als Platzhalter (2'9) gebildet wird und wobei insbesondere der Kern (20) mit dem Spulenhalter (23) und der elektrischen Spuleneinrichtung (19) und wenigstens einem Einsatz (27) in die Feldschließeinrichtung (9) eingeführt wird.

5. Verfahren nach einem der beiden vorhergehenden Ansprüche, wobei ein Kern (20) verwendet wird, der quer zu einer Längsachse (21) wenigstens eine seitliche Einschnürung (22) aufweist.

6. Verfahren nach einem der vorhergehenden Ansprüche, wobei das Verfüllen als Vergießen und/oder Verspritzen mit der dem sich verfestigenden Medium (10) unter Einsatz von Unterdruck und/oder Überdruck erfolgt und wobei insbesondere nach dem Gießvorgang das sich verfestigende Medium (10) aushärtet und wobei nach dem Aushärten wenigstens ein Platzhalter (29) entfernt wird.

7. Verfahren nach einem der vorhergehenden Ansprüche, wobei der Platzhalter aus dem Trennkörper durch Aufschmelzen, Auflösen oder Auswaschen entfernt wird.

8. Baugruppe (1) insbesondere erhalten nach einem Verfahren der vorhergehenden Ansprüche mit einem Trennkörper (2) und wenigstens einem daran vorgesehenen und sich entlang des Trennkörpers (2) erstreckenden Strömungskanal (3, 4) mit wenigstens einer Strömungsbahn (5, 6), um eine Strömung eines magnetorheologischen Fluids entlang des Strömungskanals (3, 4) des Trennkörpers (2) zu beeinflussen,
wobei der Trennkörper (2) wenigstens eine Magnetfelderzeugungseinrichtung (8) zur Erzeugung eines Magnetfeldes und und eine Feldschließeinrichtung (9) umfasst, **dadurch gekennzeichnet,**
**dass** die Feldschließeinrichtung (9) mit der Magnetfelderzeugungseinrichtung (8) unter Verwendung wenigstens eines entfernbaren Platzhalters (29) mit wenigstens einem sich verfestigenden Medium (10) verfüllt ist, derart, dass nach der Entfernung des Platzhalters (29) der Trennkörper wenigstens einen dreidimensional vordefinierten Strömungskanal (3, 4) aufweist.

9. Baugruppe (1) nach dem vorhergehenden Anspruch, wobei der Platzhalter wiederverwendbar ist.

10. Baugruppe (1) nach einem der vorhergehenden Ansprüche, wobei wenigstens ein Strömungskanal (3, 4) durch wenigstens eine Trennwand (11) in wenigstens zwei Strömungsbahnen (5, 6) geteilt wird und wobei insbesondere die Trennwand (11) wenigstens eine Rasteinrichtung (13) aufweist.

11. Baugruppe (1) nach einem der vorhergehenden Ansprüche, wobei wenigstens eine Magnetfelderzeugungseinrichtung (8) als elektrische Spuleneinrichtung (19) ausgebildet ist, an der wenigstens ein Kern (20) aus einem ferromagnetischen Material vorgesehen ist und wobei der Kern (20) quer zu einer Längsachse (21) wenigstens eine seitliche Einschnürung (22) aufweist.

12. Baugruppe (1) nach einem der vorhergehenden Ansprüche, wobei wenigstens eine Strömungsbahn (5, 6) zwischen einer Polkappe (24, 25) des Kerns (20) und der Feldschließeinrichtung (9) angeordnet ist.

13. Baugruppe (1) nach einem der vorhergehenden Ansprüche, wobei der Trennkörper (2) als Kolben (30) ausgebildet ist und in einer Kolbenführung (31) bewegbar geführt ist und wobei insbesondere eine Kolbenstange (32) mit dem Kolben (30) verbunden ist.

14. Baugruppe (1) nach dem vorhergehenden Anspruch, wobei eine Achse (26) der elektrischen Spuleneinrichtung (19) quer zu einer Längsachse (33) der Kolbenführung (31) ausgerichtet ist und wobei insbesondere die Feldschließeinrichtung (9) einen Kolbengrundkörper (35) bildet und wobei der Kolbengrundkörper (35) wenigstens einen Hinterschnitt (45) aufweist.

15. Baugruppe nach Anspruch 13, wobei die Strömungskanäle (3,4) im Kolben (30) zumindest teilweise durch das sich verfestigenden Medium (10) begrenzt werden.

## Claims

1. Method for manufacturing a module (1) having a partition (2) and at least one flow duct (3, 4) having at least one flow path (5, 6) provided thereat and extending along the length of the partition (2) for influencing the flow of a magnetorheological fluid along the flow duct (3, 4) of the partition (2),
the partition (2) comprising at least one magnetic field generating device (8) for generating a magnetic field and a field closing device (9),
**characterized in**
**that** the magnetic field generating device (8) and the field closing device (9) are filled up with at least one solidifying medium (10) using at least one placeholder (29) for forming at least part of the flow duct (3, 4) so as to form at the partition at least one three-dimensionally predefined flow duct (3, 4) which is available after removing the placeholder (29).

2. The method according to the preceding claim wherein the compound formed by the solidifying medium is hydraulically pressure-tight so that the magnetorheological fluid must flow through the flow duct.

3. The method according to the preceding claim wherein a core (20) is surrounded by a coil support (23) and wherein an electric coil device (19) as a magnetic field generating device (8) is wound around the coil support (23) and wherein at least one partition wall (11) is disposed on the coil support (23).

4. The method according to the preceding claim wherein at least one insert (27) is formed of a stack (28) of a first partition gauge (36) as a placeholder (29), at least one partition wall (11) and at least one second partition gauge (37) as a placeholder (29) and wherein in particular the core (20) with the coil support (23) and the electric coil device (19) and at least one insert (27) are inserted into the field closing device (9).

5. The method according to any of the two preceding claims wherein a core (20) is used which shows at least one lateral necking (22) transverse to a longitudinal axis (21).

6. The method according to any of the preceding claims wherein filling up is carried out by casting and/or injecting with the solidifying medium (10) while employing low pressure and/or excess pressure and wherein in particular after casting, the solidifying medium (10) cures and wherein after curing at least one placeholder (29) is removed.

7. The method according to any of the preceding claims wherein the placeholder is removed from the partition by melting, dissolving or washing out.

8. Module (1) in particular obtained by a method according to the preceding claims with a partition (2) and at least one flow duct (3, 4) having at least one flow path (5, 6) provided thereat and extending along the length of the partition (2) for influencing the flow of a magnetorheological fluid along the flow duct (3, 4) of the partition (2),
the partition (2) comprising at least one magnetic field generating device (8) for generating a magnetic field and a field closing device (9),
**characterized in that** the field closing device (9) with the magnetic field generating device (8) is filled up with at least one solidifying medium (10) using at least one removable placeholder (29), such that after removing the placeholder (29) the partition comprises at least one three-dimensionally predefined flow duct (3, 4).

9. The module (1) according to the preceding claim wherein the placeholder is reusable.

10. The module (1) according to any of the preceding claims wherein at least one flow duct (3, 4) is subdivided by at least one partition wall (11) in at least two flow paths (5, 6) and wherein in particular the partition wall (11) comprises at least one detent mechanism (13).

11. The module (1) according to any of the preceding claims wherein at least one magnetic field generating device (8) is formed as an electric coil device (19) on which at least one core (20) of a ferromagnetic material is provided and wherein the core (20) comprises at least one lateral necking (22) transverse to a longitudinal axis (21).

12. The module (1) according to any of the preceding claims wherein at least one flow path (5, 6) is disposed between a pole end plate (24, 25) of the core (20) and the field closing device (9).

13. The module (1) according to any of the preceding claims wherein the partition (2) is disposed as a piston (30) and is movably guided in a piston guide (31) and wherein in particular a piston rod (32) is connected with the piston (30).

14. The module (1) according to the preceding claim wherein the axis (26) of the electric coil device (19) is oriented transverse to a longitudinal axis (33) of the piston guide (31) and wherein in particular the field closing device (9) forms a piston body (35) and wherein the piston body (35) has at least one undercut (45).

15. The module according to claim 3 wherein the flow ducts (3, 4) in the piston (30) are at least partially enclosed by the solidifying medium (10).

## Revendications

1. Procédé de fabrication d'un module (1) doté d'un séparateur (2) et d'au moins un canal d'écoulement (3, 4) prévu dessus et s'étendant le long du séparateur (2), doté d'au moins une voie d'écoulement (5, 6) pour influer sur un écoulement d'un fluide magnéto-rhéologique le long du canal d'écoulement (3, 4) du séparateur (2),
ledit séparateur (2) comprenant au moins un dispositif de génération de champ magnétique (8) destiné à générer un champ magnétique et un dispositif de fermeture de champ (9), **caractérisé en ce**
**que** le dispositif de génération de champ magnétique (8) et le dispositif de fermeture de champ (9) sont remplis d'au moins un milieu se solidifiant (10) tandis qu'est utilisé au moins un écarteur (29) destiné à constituer au moins une partie du canal d'écoulement (3, 4), pour constituer sur le séparateur (2) au moins un canal d'écoulement (3, 4) tridimensionnel prédéfini qui est disponible après que l'écarteur (29) a été enlevé.

2. Procédé selon la revendication précédente, la connexion formée par le milieu se solidifiant (10) étant hydrauliquement étanche à la pression de telle sorte que le fluide magnéto-rhéologique doit s'écouler par le canal d'écoulement (3, 4).

3. Procédé selon la revendication précédente, un noyau (20) étant entouré d'un support de bobine (23), un dispositif de bobine électrique (19) étant enroulé en tant que dispositif de génération de champ magnétique (8) sur le support de bobine (23), et au moins une cloison (11) étant agencée sur le support de bobine (23).

4. Procédé selon la revendication précédente, au moins un élément (27) d'une pile (28) d'un premier gabarit de séparation (36) étant formé en tant que séparateur (29), d'au moins une cloison (11) et d'au moins un deuxième gabarit de séparation (37) en tant que séparateur (29), et le noyau (20) notamment étant introduit dans le dispositif de fermeture de champ (9) avec le support de bobine (23), le dispositif de bobine électrique (19) et au moins un élément (27).

5. Procédé selon l'une quelconque des deux revendications précédentes, étant utilisé un noyau (20) qui présente au moins un rétrécissement latéral (22) à la perpendiculaire d'un axe longitudinal (21).

6. Procédé selon l'une quelconque des revendications précédentes, le remplissage ayant lieu en tant que coulée et/ou d'injection du milieu se solidifiant (10) avec mise en oeuvre parallèle de dépression et/ou de surpression, après l'opération de coulée notamment, le milieu se solidifiant (10) se durcissant et à la suite du durcissement au moins un écarteur (29) étant retiré.

7. Procédé selon l'une quelconque des revendications précédentes, l'écarteur étant retiré du séparateur par fusion, dissolution ou lessivage.

8. Module (1) obtenu notamment selon un procédé des revendications précédentes, doté d'un séparateur (2) et d'au moins un canal d'écoulement (3, 4) prévu dessus et s'étendant le long du séparateur (2), doté d'au moins une voie d'écoulement (5, 6) pour influer sur un écoulement d'un fluide magnéto-rhéologique le long du canal d'écoulement (3, 4) du séparateur (2),
ledit séparateur (2) comprenant au moins un dispositif de génération de champ magnétique (8) destiné à générer un champ magnétique et un dispositif de fermeture de champ (9), **caractérisé en ce**
**que** le dispositif de fermeture de champ (9) est rempli, avec le dispositif de génération de champ magnétique (8) et en utilisant au moins un écarteur amovible (29), d'au moins un milieu se solidifiant (10) de telle sorte que, une fois l'écarteur (29) enlevé, le séparateur (2) présente au moins un canal d'écoulement (3, 4) tridimensionnel prédéfini.

9. Module (1) selon la revendication précédente, l'écarteur (29) étant réutilisable.

10. Module (1) selon l'une quelconque des revendications précédentes, au moins un canal d'écoulement (3, 4) étant divisé par au moins une cloison (11) en au moins deux voies d'écoulement (5, 6) et la cloison (11) notamment présentant au moins un dispositif d'encliquetage (13).

11. Module (1) selon l'une quelconque des revendications précédentes, au moins un dispositif de génération de champ magnétique (8) étant conçu en tant que dispositif de bobine électrique (19), sur laquelle est prévu au moins un noyau (20) en matériau ferromagnétique et le noyau (20) présentant à la perpendiculaire d'un axe longitudinal (21) au moins un rétrécissement latéral (22).

12. Module (1) selon au moins l'une quelconque des revendications précédentes, au moins une voie d'écoulement (5, 6) étant agencée entre une calotte polaire (24, 25) du noyau (20) et le dispositif de fermeture de champ (9).

13. Module (1) selon l'une quelconque des revendications précédentes, le séparateur (2) étant conçu en tant que piston (30) et étant guidé mobile dans un entraînement de piston (31), et notamment une tige de piston (32) étant reliée au piston (30).

14. Module (1) selon la revendication précédente, un axe (26) du dispositif de bobine électrique (19) étant orienté perpendiculairement à un axe longitudinal (33) de l'entraînement de piston (31), notamment le dispositif de fermeture de champ (9) formant un corps de base de piston (35) et ledit corps de base de piston (35) présentant au moins une pente de dépouille (45).

15. Module selon la revendication 13, les canaux d'écoulement (3, 4) étant limités dans le piston (30) au moins partiellement par le milieu se solidifiant (10).
